# EUROPEAN PATENT SPECIFICATION

(11) **EP 2 048 891 B1**
(45) Date of publication and mention of the grant of the patent: **21.11.2012**
(21) Application number: 07720562.3
(22) Date of filing: 27.03.2007
(51) Int. Cl.: H04W 48/18

(54) **METHODS AND EQUIPMENTS OF NOTIFYING USER'S LOCATION IN MOBILE COMMUNICATION SYSTEM**
VERFAHREN UND GERÄTE ZUR MITTEILUNG DES ORTS DES BENUTZERS IN EINEM MOBILKOMMUNIKATIONSSYSTEM
PROCÉDÉS ET ÉQUIPEMENTS PERMETTANT DE SIGNALER À UN UTILISATEUR SA POSITION DANS UN SYSTÈME MOBILE DE COMMUNICATIONS

(30) Priority: 25.07.2006 CN 200610107770
(43) Date of publication of application: 15.04.2009
(73) Proprietor: Huawei Technologies Co., Ltd., Shenzhen, Guangdong Province 518129 (CN)
(72) Inventor: ZHU, Wei, Guangdong 518129 (CN)
(74) Representative: Kreuz, Georg Maria
(86) International application number: PCT/CN2007/000988
(87) International publication number: WO 2008/014648

(56) References cited:
- EP-A1- 1 513 358
- WO-A1-2005/067332
- CN-A- 1 474 615
- CN-A- 1 596 002
- CN-A- 1 695 349
- US-A1- 2003 119 481
- US-A1- 2003 148 771
- US-A1- 2004 066 756
- US-A1- 2005 148 342
- US-A1- 2005 186 948
- US-A1- 2005 239 461

## Description

### BACKGROUND OF THE INVENTION

### Field of the Invention

The present invention relates to a mobile communication system, and more particularly to service processing in a mobile communication system with an access point (AP) and an access gateway (AG) introduced therein.

### Description of the Related Art

Along with the rapid progress of Internet services and wide application of broadband access networks and wireless networks, high-speed and convenient access networks are becoming increasingly popular. Meanwhile, users demand high-speed, convenient, and low-cost handheld wireless devices to enjoy wireless data services.

Therefore, in order to better utilize the conventional network resources and save the cost for network operators, a UMTS (universal mobile telecommunications system) access point and a UMTS access gateway (together referred to as a UMTS AP-AG) are introduced in the conventional mobile network, and a Gi interface is configured in the AP to directly access the Internet. In this way, the impact of high speed data (HSD) services on the mobile network is greatly reduced, and more wireless HSD users may access the conventional wireless network. The introduction of the AP also solves air interface resource bottleneck problems in the wireless data services, and splits the HSD service users in a macro coverage cell.

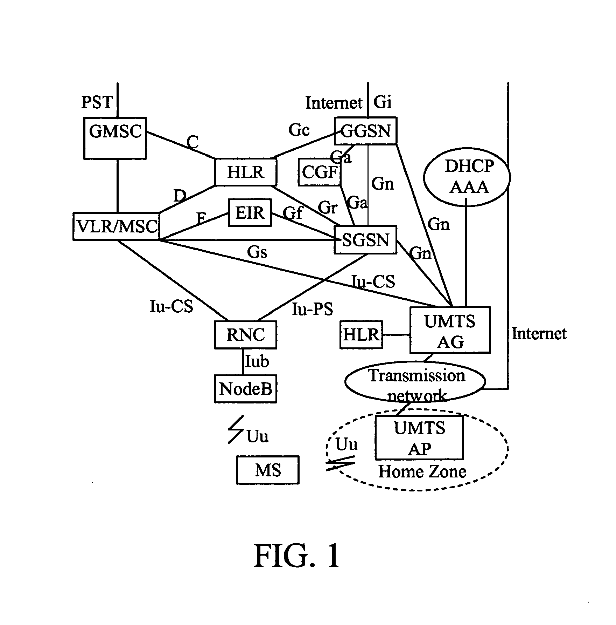

FIG. 1 is a schematic diagram of a topology structure of an access network including a UMTS AP-AG.

The AP system has newly added network elements including AP and AG.. The AP functions as a Node B and a radio network controller (RNC), and is responsible for the access bearer of a user equipment (UE). The AG converges a large number of APs, and is responsible for connection of services provided by core network equipments in circuit switched (CS) domain Meanwhile, the AG integrates the function of a serving GPRS supporting node (SGSN) and thus realizes the function of a packet switched (PS) control panel.

Other network elements illustrated in the figure belong to a conventional UMTS mobile network.

A gateway mobile switching centre (GMSC) and MSC are adapted to manage CS domain services.

A home location register (HLR) is adapted to save registration information of users and provide a user authentication function.

An equipment identity register (EIR) is adapted to record information of UE for the query of other network elements, and provide a black list for mobile equipments.

An SGSN is adapted to provide a control panel function of PS domain services.

A gateway GPRS supporting node (GGSN) is adapted to provide a user panel function of PS domain services.

A charging gateway function (CGF) is adapted to provide a service charging function.

ANodeB is adapted to provide a wireless interface physical layer bearer.

A radio network controller (RNC) is adapted to manage the wireless interface bearer.

A mobile station (MS) generally refers to a cell phone.

In the access network as shown in FIG. 1, the charge rate of using wireless data services in a cell covered by the UMTS AP is much cheaper than that in a macro coverage cell. However, the access network shown in FIG. 1 cannot provide the service of prompting the location of users (i.e., whether in a macro coverage cell or an AP coverage cell), and thus most of the users unaware of their location are unable to use the high-speed data services at will.

US2005/0239461 discloses a system for employing a wireless local area network (WLAN) as a cellular network routing area. The system includes a cellular network capable of determining a location where a service request is made. The cellular network includes a packet-based support node B, which determines if the request can be serviced through a WLAN, which is identified in the cellular network as a routing area. Packet data protocol context is maintained while servicing the request using the WLAN to provide smooth interworking between the WLAN and the cellular network.

US2005/0186948 discloses a system including a network controller to communication with a telecommunication network. The network controller is coupled to one or more unlicensed wireless base stations serving one or more unlicensed wireless access areas. Each unlicensed wireless access area is mapped to one or more licensed wireless access areas. The system includes a mobile station to communication with the telecommunication network using a licensed wireless communication channel in a licensed wireless access area, and an unlicensed wireless communication channel in an unlicensed wireless access area.

US2003/0119481 discloses a method of arranging roaming in a telecommunication system comprising a local network, at least one public land mobile network, and a terminal equipment. Public land mobile network identifiers and network element identifiers linked in the telecommunication system are transmitted to the terminal equipment. The terminal equipment selects a public land mobile network by means of a comparison of the received public land mobile network identifiers and public land mobile network identifiers stored in the terminal equipment. Access is arranged for the terminal equipment via the local network to the network element determined by the network element identifier linked with the identifier of the selected public land mobile network.

### SUMMARY OF THE INVENTION

Accordingly, embodiments of the present invention are directed to a mobile communication system and a method for notifying a user's location

An embodiment of the present invention is directed to a user equipment (UE) capable of notifying the user of the location thereof.

A method of notifying user's location in a mobile communication system is provided in an embodiment of the present invention. The mobile communication system includes an AP and an AG. The method includes the following process:

The UE resides in an AP coverage cell, and receives a network prompting message delivered by the AP, wherein the network prompting message is a GMM information message, or the network prompting message is an MM information message.

The UE notifies a user of the network that the user is located in a network covered by an AP according to the network prompting message.

The UE receives a promoting message from a macro coverage network when the UE accesses in the macro coverage cell from the AP coverage cell.

If the AP coverage cell and the coverage cell use a same public land mobility network ID, PLMN ID, the UE replaces the character string corresponding to the PLMN ID in the UE with the macro coverage network name in the promoting message, and displays the macro coverage network name to the user.

Another method of notifying user's location in a mobile communication system is provided in another embodiment of the present invention. The mobile communication system includes an AP and an AG. The method includes the following process:

The UE resides in an AP coverage cell, and receives a network prompting message delivered by the AP, wherein the network prompting message is a text short message or a multimedia short message.

The UE notifies a user of the network that the user is located in a network covered by an AP according to the network prompting message.

The UE receives a promoting message from a macro coverage network when the UE accesses in the macro coverage cell from the AP coverage cell.

If the AP coverage cell and the coverage cell use a same public land mobility network ID, PLMN ID, the UE replaces the character string corresponding to the PLMN ID in the UE with the macro coverage network name in the promoting message, and displays the macro coverage network name to the user.

A UE including a receiving unit, a user location prompting unit and replacing means is provided in an embodiment of the present invention.

The receiving unit is adapted to receive a network prompting message from an access point, AP, when the UE residing in the AP coverage cell, and is further adapted to receive a promoting message from a macro coverage network when the UE accesses in the macro coverage cell from the AP coverage cell, wherein the network prompting message is a GMM information message, or the network prompting message is an MM information message.

The user location prompting unit is adapted to notify a user that the user is located in a network covered by an AP according to the network prompting message.

The replacing means is adapted to replace the character string corresponding to a public land mobility network ID, PLMN ID, in the UE with the macro coverage network name in the promoting message if the AP coverage cell and the coverage cell use the same PLMN ID, and to display the macro coverage network name to the user.

Another UE including a receiving unit, a user location prompting unit and replacing means is provided in another embodiment of the present invention.

The receiving unit is adapted to receive a network prompting message from an access point, AP, when the UE residing in the AP coverage cell, and is further adapted to receive a promoting message from a macro coverage network when the UE accesses in the macro coverage cell from the AP coverage cell, wherein the network prompting message is a text short message or a multimedia short message.

The user location prompting unit is adapted to notify a user that the user is located in a network covered by an AP according to the network prompting message.

The replacing means is adapted to replace the character string corresponding to a public land mobility network ID, PLMN ID, in the UE with the macro coverage network name in the promoting message if the AP coverage cell and the coverage cell use the same PLMN ID, and to display the macro coverage network name to the user.

A mobile communication system including an access point and a user equipment.

In the embodiments of the present invention, if the user equipment resides in the AP coverage cell, the AP delivers the network prompting message to the UE in time, and the UE notifies the user that the user is within the network covered by the AP according to the network prompting message. Therefore, the user is able to duly obtain the information of the network that the user is within. In this manner, the QoS can be better guaranteed and the transparency of the cost can be effectively enhanced.

### BRIEF DESCRIPTION OF THE DRAWINGS

FIG. 1 is a schematic diagram showing a topology structure of a conventional access network including a UMTS AP-AG;

FIG. 2 is a schematic flow chart of a method according to an embodiment of the present invention;

FIG. 3 is a schematic flow chart of a UE performing location area update (LAU) according to an embodiment of the present invention;

FIG. 4 is a schematic flow chart of a method according to another embodiment of the present invention;

FIG. 5 is a schematic block diagram of an AP apparatus according to an embodiment of the present invention;

FIG. 6 is a schematic block diagram of a UE according to an embodiment of the present invention; and

FIG. 7 is a schematic block diagram of a UE according to another embodiment of the present invention.

### DETAILED DESCRIPTION OF THE EMBODIMENTS

In a mobile communication system including an AP and an AG according to an embodiment of the present invention, when a UE resides in an AP coverage cell, the AP delivers a network prompting message to the UE, and the UE notifies, after receiving the network prompting message, a user that the user is located in a network covered by the AP.

The embodiments of the present invention are not limited to a universal mobile telecommunications system (UMTS) with the AP and AG introduced therein, and may be applicable to other network systems with the AP and AG introduced therein. In order to facilitate the understanding of the embodiments of the present invention, the UMTS with an AP and an AG introduced therein is described as an example below.

The implementation of a method for notifying user's location according to an embodiment of the present invention is described in detail below.

A UE is capable of displaying a public land mobility network ID (PLMN ID) or a network name of the network that it is within on a screen thereof. In the embodiments of the present invention, the UE displays the PLMN ID or the network name to prompt the user whether the user is within a macro coverage cell or an AP coverage cell, so that the user may be aware of the network that the user is within.

The method according to embodiments of the present invention may be implemented in two manners, in other words, by setting the macro coverage network and the AP coverage network with identical PLMN ID or different PLMN IDs. The two manners are described in detail below.

In an embodiment of the present invention, the AP coverage network and the macro coverage network use different PLMN IDs. Here, for ease of description, the PLMN ID of the AP coverage network is referred to as a first PLMN ID, the PLMN ID of the macro coverage network is referred to as a second PLMN ID, and the first PLMN ID is different from the second PLMN ID.

The UE may acquire its location according to the PLMN ID of the cell it resides in, and display the corresponding information on the screen.

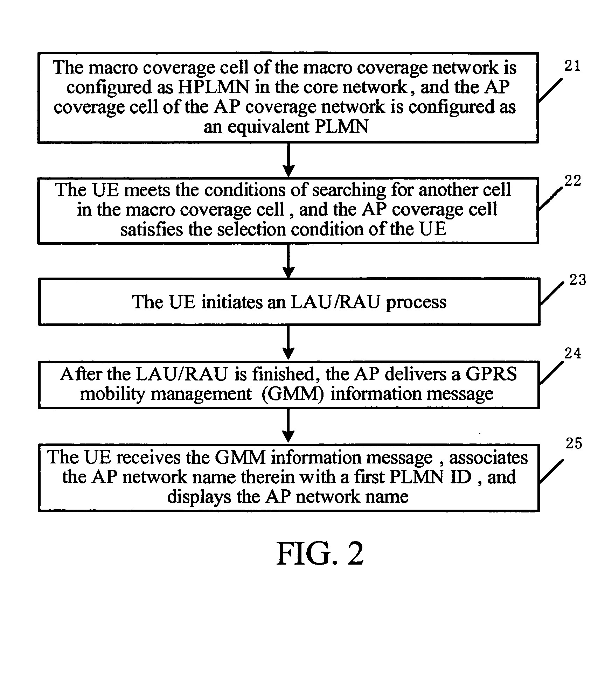

Referring to FIG. 2, a method for notifying a user's location according to an embodiment of the present invention includes the following process.

In Block 21, in the core network, the macro coverage cell of the macro coverage network is configured as a home PLMN (HPLMN), the AP coverage cell of the AP coverage network is configured as an equivalent PLMN of the macro coverage cell, and thus the UE is capable of performing free reselection between the macro coverage network and the AP coverage network.

In Block 22, the UE initiates a cell searching process in a macro coverage cell after conditions for searching other cells are satisfied, and finds an AP coverage cell satisfying selection conditions of the UE. As in Step 21, the AP coverage cell has been configured as the equivalent PLMN of the macro coverage cell, and thus the UE considers that the AP coverage cell and the macro coverage cell have the same priority during the cell searching process.

In Block 23, the UE attempts to access the AP coverage cell, and initiates a location area update/routing area update (LAU/RAU) process.

If the LAU/RAU is successful, it indicates that the UE is accepted by the AP coverage cell and may reside in the cell; otherwise, the UE needs to attempt to access another cell.

In Block 24, after completing the LAU/RAU, the AP delivers a GPRS mobility management (GMM) information message or a mobility management (MM) information message to the UE. The GMM information message or the MM information message includes the AP network name required to be displayed by the UE.

In Block 25, the UE receives the GMM information or MM information message, associates the AP network name with the PLMN ID of the AP coverage cell, where the UE currently resides, (i.e., the first PLMN ID) in the system message broadcasted by the AP coverage cell. The UE obtains an AP network name corresponding to the first PLMN ID, and displays the AP network name on the screen.

When the UE accesses the macro coverage cell again, the UE obtains the PLMN ID of the macro coverage network from the system message broadcasted by the macro coverage cell. If a mapping table of a PLMN ID and a network name is saved in the UE, the network name (usually the name of the operator) is obtained by looking up the mapping table of the PLMN ID and the network name saved in the UE, and the obtained network name is displayed on the screen to prompt the user that the user has returned to the macro coverage cell. If the UE does not have the mapping table of the PLMN ID and the network name, for example, in a circumstance that the macro network does not support the GMM information/MM information message, the PLMN ID of the macro network may be directly displayed.

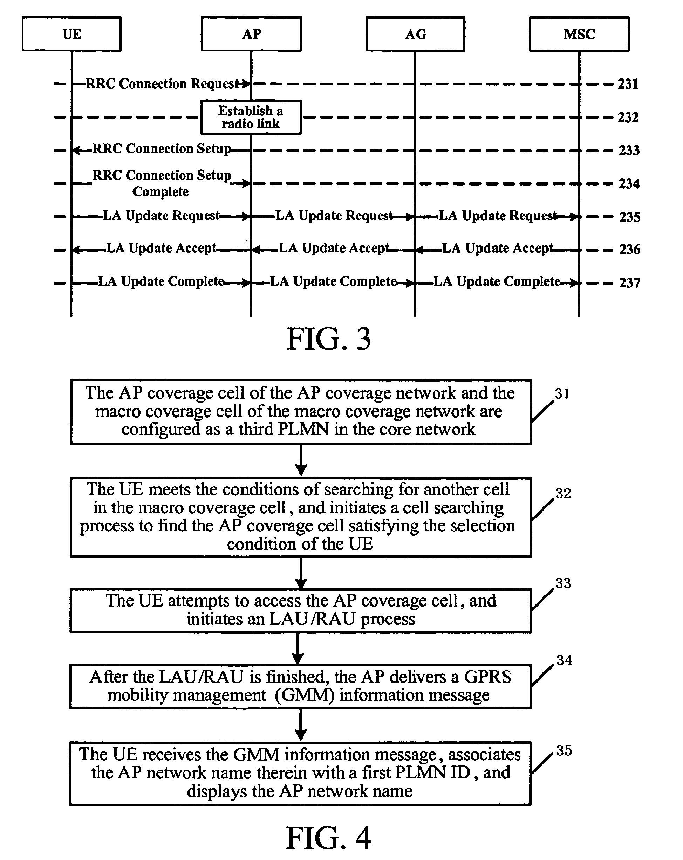

Referring to FIG. 3, the LAU/RAU in Step 23 is described below by taking the LAU as an example. The process includes the following actions.

In Block 231, the UE sends a radio resource control (RRC) connection request message to the AP.

In Block 232, the AP establishes a corresponding radio link according to the RRC connection request message.

In Block 233, the AP returns an RRC connection setup message to the UE.

In Block 234, the UE sends an RRC connection setup complete message to the AP.

In Block 235, the UE sends an LA update request message to a mobile switching center (MSC) through the AP and the AG.

In Block 236, the MSC returns an LA update accept message to the UE through the AG and the AP.

In Block 237, the UE sends an LA update complete message to the MSC through the AG and the AP.

In the embodiment of the present invention, the GMM information or MM information message is generated and delivered by the AP, and thus the user may modify in the AP the content of the location prompting, i.e., the user may set the content of the location prompting in the AP as the AP network name. Therefore, personalized prompting services may be provided for the users. For example, the users may set their personal AP network names according to individual tastes. The AP fills the content of the location prompting, such as the personal AP network name, into the GMM information or MM information message, and delivers the GMM information or MM information message, so as to realize the personalization of the prompting information.

For example, the user may set "secure high speed data service" as the AP network name to be saved in the GMM information or MM information. Thus, after completing the LAU/RAU, the AP delivers the GMM information message or MM information message to the UE, and the UE on receiving the GMM information or MM information message extracts the AP network name in the GMM information or MM information message as "secure high speed data service". Therefore, the prompting information of "secure high speed data service" may appear for displaying the operator on the UE, so as to prompt the user that the user is currently within the area covered by the AP network.

Meanwhile, in the method according to the embodiment of the present invention, different APs use the same PLMN ID, but each AP delivers its own GMM information message or MM information message after completing the LAU/RAU. Thus, the UE receives different AP prompting information from different APs and displays the AP prompting information on the screen as the network name.

In another embodiment of the present invention, the AP coverage network and the macro coverage network use the same PLMN ID. Here, for ease of description, the PLMN ID of the AP coverage network and the macro coverage network is referred to as a third PLMN ID. The third PLMN ID may be the same as the first PLMN ID or the second PLMN ID, or may be an additionally set PLMN ID.

As shown in FIG. 4, a method for notifying a user's location according to another embodiment of the present invention includes the following.

In Block 31, in the core network, the AP coverage cells of the AP coverage network and the macro coverage cells of the macro coverage network are all configured as the third PLMN.

In Block 32, the UE initiates a cell searching process in the macro coverage cell after conditions of searching other cells are satisfied, and finds an AP coverage cell satisfying the selection conditions of the UE.

In Block 33, the UE attempts to access the AP coverage cell, and initiates an LAU/RAU process.

In Block 34, after completing the LAU/RAU, the AP delivers a GMM information message or MM information message to the UE. The message includes the AP network name required to be displayed by the UE.

In Block 35, the UE receives the GMM information message or MM information message, associates the AP network name in the GMM information message or MM information message with the PLMN ID of the AP coverage cell, where the UE currently resides, (i.e., the third PLMN ID) in the received system message broadcasted by the AP coverage cell. The UE obtains an AP network name corresponding to the third PLMN ID, and displays the AP network name on the screen.

The process of the UE accessing the AP coverage cell from the macro coverage cell is described above. When the UE accesses the macro coverage cell from the AP coverage cell, similarly, the UE receives the GMM information or MM information message sent by the core network after completing the LAU/RAU, replaces the character string corresponding to the PLMN ID in the UE with the network name (generally the name of the operator) in the GMM information or MM information message, and displays the network name to the user. In this manner, the user is aware that he/she has accessed the macro coverage range.

Compared with the embodiment corresponding to Fig 2, in the embodiment of the present invention corresponding to Fig 4, the core network needs to send the GMM information message or MM information message as the AP coverage cell and the macro coverage cell adopt the same PLMN ID. The GMM information or MM information message delivered by the AP modifies the network name corresponding to the PLMN ID into the own personalized prompting information, and the UE receives, displays and records the personalized prompting information. When the UE accesses the macro coverage cell from the AP coverage cell, in order to prompt the correct location information to the user, the macro coverage network needs to send a GMM information message or MM information message and modify the character string corresponding to the PLMN ID into the name of the macro coverage network (the name of the operator), and thus the user is aware that he/she has accessed the macro coverage cell.

In the embodiment of the present invention, the GMM information or MM information message delivered by the AP may be set by a user, and the user may set the AP network name as the content of the location prompt on the AP. For example, the user may set "secure high speed data service" as the AP network name. Thus, when the AP delivers the GMM information or MM information message with the network name "secure high speed data service", the prompting information of "secure high speed data service" may appear at the position for displaying the operator on the UE as the user accesses the AP coverage cell, so as to prompt the user that the user is currently within the area covered by the AP network.

In the above mentioned two embodiments, the AP network name is carried in the GMM information message or MM information message, and then notified to the user, so that the user may be aware of the network the user is within.

In addition, the embodiment of the present invention may also be implemented in the following manners. That is, after completing the LAU/RAU, the UE receives the GMM information or MM information message, and then notifies the user through pictures, voices, or icons, for example, by a voice of "secure high speed data service" or a specific icon. In this manner, the user is aware of the network that the user is within in time, and decides whether to use certain services related to rate and location like high-speed data services in this area. Therefore, a message triggering module may be added or disposed in the conventional terminal, so as to display a corresponding picture, voice, or icon to the user on receiving a specific message.

Herein, the UE may also notify the user through pictures, voices, or icons after receiving and sending the LA update accept message.

Further, the method according to the embodiment of the present invention may also be implemented in the following manner. That is, after the LAU/RAU is finished, the AP directly delivers a text short message or a multimedia short message including the information for prompting the user that the user is within the AP coverage network to the UE. In this manner, the user is aware of the network that the user is within in time, and decides whether to use certain services related to rate and location like high-speed data services in this area.

Those of ordinary skill in the art should understand that all or part of the steps for implementing the methods of the above embodiments can be accomplished by related hardware under the instruction of programs, and the programs may be stored in a computer readable storage medium, such as an ROM/RAM, magnetic disk, and optical disk.

It can be seen from the above mentioned embodiments of the present invention that, when the user resides in the AP coverage cell, the AP delivers the network prompting message to the UE in time, and the UE notifies the user that the user is within the AP coverage network according to the network prompting message. Therefore, the user is able to obtain the information about the network that the user is within, so as to better guarantee the QoS and effectively enhance transparency of the cost. When the user accesses or leaves the AP coverage cell, the location change may be displayed to the user quickly. In addition, when the network information is displayed to the user as the network name at a fixed area on the screen, the user is not bothered, and the change of the network location can be provided to the user effectively and timely no matter which service is adopted by the user.

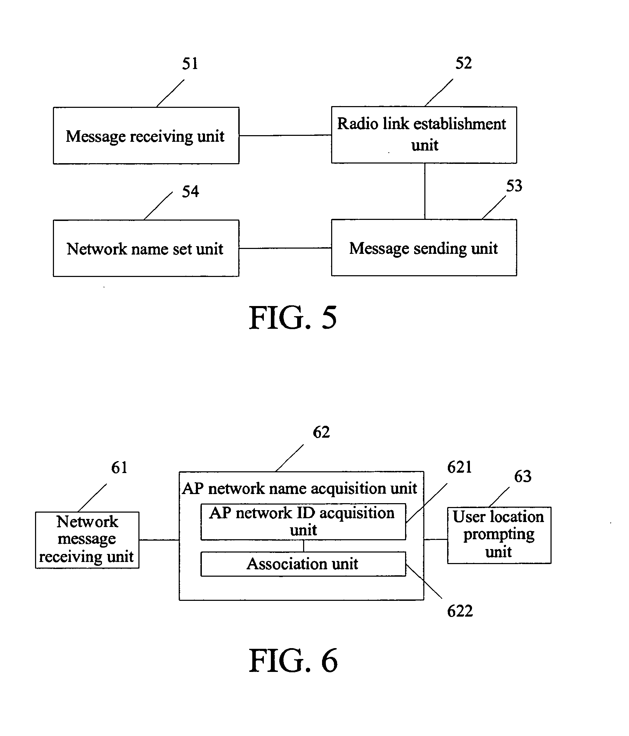

Referring to FIG. 5, an AP apparatus including a message receiving unit 51, a radio link establishment unit 52, and a message sending unit 53 is further provided in an embodiment of the present invention. The message receiving unit 51 is adapted to receive an RRC connection request message of a UE attempting to access an AP coverage cell. The radio link establishment unit 52 is adapted to establish a required radio link after the message receiving unit 51 receives the RRC connection request message. The message sending unit 53 is adapted to deliver a network prompting message to the UE after the radio link is established and the UE completes the LAU/RAU process, and notify the user of the network that the user is within. The network prompting message may be a GMM information message including the AP network name. In this manner, the UE is able to notify the user that the user is within the network covered by the AP according to the message. For the specific implementation process, reference can be made to the description of the above embodiments of the present invention, and it will not be repeated herein again.

Moreover, in order to realize the personalized notifying information, as shown in FIG. 5, a network name set unit 54 is further disposed to define the AP network name, for example, to change the AP network name (usually the name of the operator) into its own personalized prompting information.

A UE is further provided in an embodiment of the present invention. For example, FIG. 6 shows a embodiment of the UE including a receiving unit 61 adapted to receive messages from network side, an acquisition unit 62 adapted to acquire an AP network name, and a user location prompting unit 63. The receiving unit 61 is adapted to receive a system message broadcasted by the cell where the UE resides, and receive a network prompting message delivered by an AP after residing in the AP coverage cell and completing an LAU/RAU process. The network prompting message includes the AP network name. The acquisition unit 62 is adapted to acquire an AP network name according to the network prompting message. The user location prompting unit 63 is adapted to notify the user that the user is within the network covered by the AP according to the AP network name. For example, the AP network name is stored in a specific file, and the user is aware of the AP network name thereof by reading the file.

The network prompting message may be a GMM information message including the AP network name or a MM information message including the AP network name.

FIG. 6 shows another embodiment of the acquisition unit 62 including an AP network ID acquisition unit 621 and an association unit 622.

After the receiving unit 61 receives the system message broadcasted by the AP coverage cell where the UE resides, the AP network ID acquisition unit 621 obtains the PLMN ID of the AP coverage cell where the UE currently resides from the system message. The association unit 622 obtains an AP network name corresponding to the PLMN ID of the AP coverage cell where the UE currently resides, according to association of the AP network name and the corresponding PLMN ID.

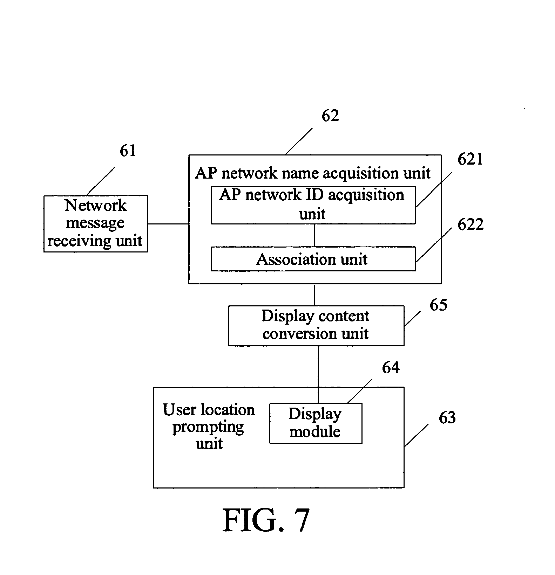

FIG. 7 is a schematic block diagram of another embodiment of the UE according to the present invention.

The UE includes a receiving unit 61 adapted to receive messages at network side, an acquisition unit 62 adapted to acquire an AP network name, and a user location prompting unit 63. The user location prompting unit 63 is provided with a display unit 64. The receiving unit 61 is adapted to receive a system message broadcasted by the cell where the UE resides, and receive a network prompting message delivered by an AP after residing in the AP coverage cell and completing an LAU/RAU process. In addition, the network prompting message includes the AP network name. The acquisition unit 62 is adapted to acquire an AP network name according to the network prompting message. The display module 64 is adapted to display the AP network name on the UE.

To achieve a personalized display, as shown in FIG. 7, a display content conversion unit 65 is further disposed. The display content conversion unit 65 is adapted to convert the AP network name obtained by the acquisition unit 62 into a specific picture or icon (for example, the icon of the operator), and transmit the specific picture or icon to the display module 64. The display module 64 is adapted to display the picture or icon, so that the user is aware of the AP network the user is within according to the picture or icon.

In addition, an audio playback unit may be further disposed in the UE, and the audio playback unit is adapted to notify the user of the AP network name through voices. As described above, the UE according to the embodiments of the present invention notifies the user that the user is within the AP coverage network according to the network prompting message. Therefore, the user obtains the information about the network that the user is within in time, thus the QoS can be better guaranteed and the transparency of the cost can be effectively enhanced.

A mobile communication system including an access point, a user equipment, and a core network is further provided in an embodiment of the present invention. The UE resides in an AP coverage cell. The AP is adapted to deliver a network prompting message to the UE, and the UE is adapted to notify a user that the user is within an AP coverage network according to the network prompting message.

Though the present invention has been disclosed above by the preferred embodiments, they are not intended to limit the present invention. Those skilled in the art can make some modifications and variations without departing from the scope of the present invention. Therefore, the protecting range of the present invention falls in the appended claims.

## Claims

1. A method for notifying a user's location in a mobile communication system, wherein the mobile communication system comprises an access point, AP, and an access gateway, AG, **characterized in that** the method comprises:
residing in, by a user equipment, UE, an AP coverage cell, and receiving a network prompting message delivered by the AP; and
notifying, by the UE, a user that the user is located in a network covered by an AP according to the network prompting message;
receiving, by the UE, a promoting message from a macro coverage network when the UE accesses in the macro coverage cell from the AP coverage cell; and
if the AP coverage cell and the coverage cell use a same public land mobility network ID, PLMN ID, replacing the character string corresponding to the PLMN ID in the UE with the macro coverage network name in the promoting message, and displaying, the macro coverage network name to the user;
wherein the network prompting message is a GPRS mobility management, GMM, information message; or
the network prompting message is a mobility management, MM, information message.

2. The method according to claim 1, **characterized in that** the GMM information message comprises an AP network name; or
the MM information message comprises an AP network name.

3. The method according to claim 2, **characterized in that** the notifying, by the UE, the user that the user is located in the network covered by the AP according to the network prompting message comprises:
obtaining, by the UE, the AP network name from the network prompting message.

4. The method according to claim 2, **characterized in that** the notifying, by the UE, the user that the user is located in the network covered by the AP according to the network prompting message comprises:
obtaining, by the UE, the PLMN ID of the AP coverage cell where the UE currently resides from the system message broadcasted by the AP coverage cell;
obtaining an AP network name corresponding to the PLMN ID of the AP coverage cell where the UE currently resides according to association of the AP network name and the corresponding PLMN ID; and
displaying the obtained AP network name to the user.

5. The method according to claim 1, **characterized in that** the residing action comprises:
initiating, by the UE, a location area update/routing area update, LAU/RAU, in the AP coverage cell; and
residing in, by the UE, the AP coverage cell after completing the LAU/RAU.

6. The method according to claim 1, **characterized by** further comprising:
configuring a macro coverage cell as a home PLMN in the core network, and configuring the AP coverage cell as an equivalent PLNM of the macro coverage cell; and
obtaining, by the UE, a PLMN ID of the macro coverage network from the system message broadcasted by the macro coverage cell after residing in the macro coverage cell, and displaying the corresponding macro coverage network name to the user.

7. The method according to claim 1, **characterized in that** the notifying action comprises:
notifying, by the UE, the user that the user is within the AP coverage network through pictures, voices, or icons according to the network prompting message.

8. A method for notifying a user's location in a mobile communication system, wherein the mobile communication system comprises an access point, AP, and an access gateway, AG, **characterized in that** the method comprises:
residing in, by a user equipment, UE, an AP coverage cell, and receiving a network prompting message delivered by the AP; and
notifying, by the UE, a user that the user is located in a network covered by an AP according to the network prompting message;
receiving, by the UE, a promoting message from a macro coverage network when the UE accesses in the macro coverage cell from the AP coverage cell; and
if the AP coverage cell and the coverage cell use a same public land mobility network ID, PLMN ID, replacing the character string corresponding to the PLMN ID in the UE with the macro coverage network name in the promoting message, and displaying, the macro coverage network name to the user;
wherein the network prompting message is a text short message or a multimedia short message.

9. A user equipment, UE, **characterized by** comprising:
a receiving unit (61,51), configured to receive a network prompting message from an access point, AP, when the UE residing in the AP coverage cell; and
a user location prompting unit (63), configured to notify a user that the user is located in a network covered by an AP according to the network prompting message;
the receiving unit is further configured to receive a promoting message from a macro coverage network when the UE accesses in the macro coverage cell from the AP coverage cell; and
means (54) for replacing the character string corresponding to a public land mobility network ID, PLMN ID, in the UE with the macro coverage network name in the promoting message if the AP coverage cell and the coverage cell use the same PLMN ID, and displaying, the macro coverage network name to the user,
wherein the network prompting message is a GPRS mobility management, GMM, information message; or
the network prompting message is a mobility management, MM, information message.

10. The UE according to claim 9, further comprising:
means (622) for obtaining a AP network name from the network prompting message.

11. The UE according to claim 10, further comprising:
means (621) for obtaining the PLMN ID of the AP coverage cell where the UE currently resides from the system message broadcasted by the AP coverage cell;
obtaining an AP network name corresponding to the PLMN ID of the AP coverage cell where the UE currently resides according to association of the AP network name and the corresponding PLMN ID.

12. The UE according to claim 10, further comprising:
means for initiating a location area update/routing area update, LAU/RAU, in the AP coverage cell; and residing in the AP coverage cell after completing the LAU/RAU

13. The UE according to claim 10, further comprising:
means (53;63) for notifying the user that the user is within the AP coverage network through pictures, voices, or icons according to the network prompting message.

14. A user equipment, UE, **characterized by** comprising:
a receiving unit (61,51), configured to receive a network prompting message from an access point, AP, when the UE residing in the AP coverage cell; and
a user location prompting unit (63), configured to notify a user that the user is located in a network covered by an AP according to the network prompting message;
the receiving unit is further configured to receive a promoting message from a macro coverage network when the UE accesses in the macro coverage cell from the AP coverage cell; and
means (54) for replacing the character string corresponding to a public land mobility network ID, PLMN ID, in the UE with the macro coverage network name in the promoting message if the AP coverage cell and the coverage cell use the same PLMN ID, and displaying, the macro coverage network name to the user,
wherein the network prompting message is a text short message or a multimedia short message.

15. A mobile communication system, comprising an access point, AP and a user equipment according to any one of claims 9-14.

## Patentansprüche

1. Verfahren zum Mitteilen des Orts eines Benutzers in einem Mobilkommunikationssystem, wobei das Mobilkommunikationssystem einen Zugangspunkt AP und ein Zugangs-Gateway AG umfasst, **dadurch gekennzeichnet, dass** das Verfahren Folgendes umfasst:
ein Benutzergerät UE verweilt in einer AP-Versorgungszelle und empfängt eine durch den AP abgelieferte Netzaufforderungsnachricht; und
das UE teilt einem Benutzer gemäß der Netzaufforderungsnachricht mit, dass sich der Benutzer in einem von einem AP versorgten Netz befindet;
das UE empfängt eine Beförderungsnachricht von einem Makro-Versorgungsnetz,
wenn das UE in der Makro-Versorgungszelle von der AP-Versorgungszelle aus zugreift; und
wenn die AP-Versorgungszelle und die Versorgungszelle eine selbe Public Land Mobility Network ID PLMN ID verwenden, wird die der PLMN ID entsprechende Zeichenkette in dem UE mit dem Makro-Versorgungsnetznamen in der Beförderungsnachricht ersetzt und der Makro-Versorgungsnetzname dem Benutzer angezeigt;
wobei die Netzaufforderungsnachricht eine Informationsnachricht des GPRS Mobility Management GMM ist; oder
die Netzaufforderungsnachricht eine Informationsnachricht des Mobility Management MM ist.

2. Verfahren nach Anspruch 1, **dadurch gekennzeichnet, dass** die GMM-Informationsnachricht einen AP-Netznamen umfasst; oder
die MM-Informationsnachricht einen AP-Netznamen umfasst.

3. Verfahren nach Anspruch 2, **dadurch gekennzeichnet, dass** das Dem-Benutzer-Mitteilen durch das UE, dass sich der Benutzer in dem durch den AP versorgten Netz befindet, gemäß der Netzaufforderungsnachricht Folgendes umfasst:
das UE erhält den AP-Netznamen aus der Netzaufforderungsnachricht.

4. Verfahren nach Anspruch 2, **dadurch gekennzeichnet, dass** das Dem-Benutzer-Mitteilen durch das UE, dass sich der Benutzer in dem durch den AP versorgten Netz befindet, gemäß der Netzaufforderungsnachricht Folgendes umfasst:
das UE erhält die PLMN ID der AP-Versorgungszelle, in der das UE gerade verweilt,
aus der durch die AP-Versorgungszelle rundgesendeten Systemnachricht;
ein AP-Netzname, der der PLMN ID der AP-Versorgungszelle entspricht, in der das UE gerade verweilt, wird gemäß einer Assoziation des AP-Netznamens und der entsprechenden PLMN ID erhalten; und
der erhaltene AP-Netzname wird dem Benutzer angezeigt.

5. Verfahren nach Anspruch 1, **dadurch gekennzeichnet, dass** die Aktion des Verweilens Folgendes umfasst:
das UE leitet eine Ortsbereichsaktualisierung/Routingbereichsaktualisierung LAU/RAU in der AP-Versorgungszelle ein; und
das UE verweilt in der AP-Versorgungszelle nach dem Abschluss der LAU/RAU.

6. Verfahren nach Anspruch 1, **dadurch gekennzeichnet, dass** es ferner Folgendes umfasst:
eine Makro-Versorgungszelle wird als ein Heimat-PLMN in dem Kernnetz konfiguriert und die AP-Versorgungszelle wird als ein äquivalentes PLMN der Makro-Versorgungszelle konfiguriert; und
das UE erhält eine PLMN ID des Makro-Versorgungsnetzes aus der durch die Makro-Versorgungszelle rundgesendeten Systemnachricht nach dem Verweilen in der Makro-Versorgungszelle und der entsprechende Makro-Versorgungsnetzname wird dem Benutzer angezeigt.

7. Verfahren nach Anspruch 1, **dadurch gekennzeichnet, dass** die Aktion des Mitteilens Folgendes umfasst:
das UE teilt dem Benutzer durch Bilder, Stimmen oder Symbole gemäß der Netzaufforderungsnachricht mit, dass sich der Benutzer in dem AP-Versorgungsnetz befindet.

8. Verfahren zum Mitteilen des Orts eines Benutzers in einem Mobilkommunikationssystem, wobei das Mobilkommunikationssystem einen Zugangspunkt AP und ein Zugangs-Gateway AG umfasst, **dadurch gekennzeichnet, dass** das Verfahren Folgendes umfasst:
ein Benutzergerät UE verweilt in einer AP-Versorgungszelle und empfängt eine durch einen AP abgelieferte Netzaufforderungsnachricht; und
das UE teilt einem Benutzer gemäß der Netzaufforderungsnachricht mit, dass sich der Benutzer in einem von einem AP versorgten Netz befindet;
das UE empfängt eine Beförderungsnachricht von einem Makro-Versorgungsnetz,
wenn das UE in der Makro-Versorgungszelle von der AP-Versorgungszelle aus zugreift; und
wenn die AP-Versorgungszelle und die Versorgungszelle eine selbe Public Land Mobility Network ID PLMN ID verwenden, wird die der PLMN ID entsprechende Zeichenkette in dem UE mit dem Makro-Versorgungsnetznamen in der Beförderungsnachricht ersetzt und der Makro-Versorgungsnetzname dem Benutzer angezeigt;
wobei die Netzaufforderungsnachricht eine Text-Kurznachricht oder eine Multimedia-Kurznachricht ist.

9. Benutzergerät UE, **dadurch gekennzeichnet, dass** es Folgendes umfasst:
eine Empfangseinheit (61, 51), die dafür ausgelegt ist, eine Netzaufforderungsnachricht von einem Zugangspunkt AP zu empfangen, wenn das UE in der AP-Versorgungszelle verweilt; und
eine Benutzerortsaufforderungseinheit (63), die dafür ausgelegt ist, einem Benutzer gemäß der Netzaufforderungsnachricht mitzuteilen, dass sich der Benutzer in einem durch einen AP versorgten Netz befindet;
wobei die Empfangseinheit ferner dafür ausgelegt ist, eine Beförderungsnachricht von einem Makro-Versorgungsnetz zu empfangen, wenn das UE in der Makro-Versorgungszelle von der AP-Versorgungszelle aus zugreift; und
Mittel (54) zum Ersetzen der Zeichenkette, die einer Public Land Mobility Network ID PLMN ID entspricht, in dem UE mit dem Makro-Versorgungsnetznamen in der Beförderungsnachricht, wenn die AP-Versorgungszelle und die Versorgungszelle dieselbe PLMN ID verwenden, und zum Anzeigen des Makro-Versorgungsnetznamens für den Benutzer,
wobei die Netzaufforderungsnachricht eine Informationsnachricht des GPRS Mobility Management GMM ist; oder
die Netzaufforderungsnachricht eine Informationsnachricht des Mobility Management MM ist.

10. UE nach Anspruch 9, ferner umfassend:
Mittel (622) zum Erhalten eines AP-Netznamens aus der Netzaufforderungsnachricht.

11. UE nach Anspruch 10, ferner umfassend:
Mittel (621) zum Erhalten der PLMN ID der AP-Versorgungszelle, in der das UE gerade verweilt, aus der durch die AP-Versorgungszelle rundgesendeten Systemnachricht;
Erhalten eines AP-Netznamens, der der PLMN ID der AP-Versorgungszelle entspricht, in der das UE gerade verweilt, gemäß einer Assoziation des AP-Netznamens und der entsprechenden PLMN ID.

12. UE nach Anspruch 10, ferner umfassend:
Mittel zum Einleiten einer Ortsbereichsaktualisierung/Routingbereichsaktualisierung LAU/RAU in der AP-Versorgungszelle; und Verweilen in der AP-Versorgungszelle nach dem Abschluss der LAU/RAU.

13. UE nach Anspruch 10, ferner umfassend:
Mittel (53, 63), um dem Benutzer durch Bilder, Stimmen oder Symbole gemäß der Netzaufforderungsnachricht mitzuteilen, dass sich der Benutzer in dem AP-Versorgungsnetz befindet.

14. Benutzergerät UE, **dadurch gekennzeichnet, dass** es Folgendes umfasst:
eine Empfangseinheit (61, 51), die dafür ausgelegt ist, eine Netzaufforderungsnachricht von einem Zugangspunkt AP zu empfangen, wenn das UE in der AP-Versorgungszelle verweilt; und
eine Benutzerortsaufforderungseinheit (63), die dafür ausgelegt ist, einem Benutzer gemäß der Netzaufforderungsnachricht mitzuteilen, dass sich der Benutzer in einem durch einen AP versorgten Netz befindet;
wobei die Empfangseinheit ferner dafür ausgelegt ist, eine Beförderungsnachricht von einem Makro-Versorgungsnetz zu empfangen, wenn das UE in der Makro-Versorgungszelle von der AP-Versorgungszelle aus zugreift; und
Mittel (54) zum Ersetzen der Zeichenkette, die einer Public Land Mobility Network ID PLMN ID entspricht, in dem UE mit dem Makro-Versorgungsnetznamen in der Beförderungsnachricht, wenn die AP-Versorgungszelle und die Versorgungszelle dieselbe PLMN ID verwenden, und zum Anzeigen des Makro-Versorgungsnetznamens für den Benutzer,
wobei die Netzaufforderungsnachricht eine Text-Kurznachricht oder eine Multimedia-Kurznachricht ist.

15. Mobilkommunikationssystem, das einen Zugangspunkt AP und ein Benutzergerät nach einem der Ansprüche 9-14 umfasst.

## Revendications

1. Procédé de notification de la position d'un utilisateur dans un système de communications mobiles, le système de communications mobiles comprenant un point d'accès, AP, et une passerelle d'accès, AG, **caractérisé en ce que** le procédé comprend :
le séjour, par un équipement utilisateur, UE, dans une cellule de couverture d'AP, et
la réception, d'un message d'invite de réseau délivré par l'AP ; et
la notification, par l'UE, à un utilisateur qu'il est situé dans un réseau couvert par un AP en fonction du message d'invite de réseau ;
la réception, par l'UE, d'un message de promotion depuis un macro réseau de couverture quand l'UE accède à la macro cellule de couverture depuis la cellule de couverture d'AP ; et
si la cellule de couverture d'AP et la cellule de couverture utilisent une même ID de réseau terrestre public de mobilité, PLMN ID, le remplacement de la chaîne de caractères correspondant à la PLMN ID dans l'UE par le nom du macro réseau de couverture dans le message de promotion, et l'affichage du nom du macro réseau de couverture à l'intention de l'utilisateur ;
dans lequel le message d'invite de réseau est un message d'information de gestion de mobilité de GPRS, GMM ; ou
le message d'invite de réseau est un message d'information de gestion de mobilité, MM.

2. Procédé selon la revendication 1, **caractérisé en ce que** le message d'information GMM comprend un nom de réseau d'AP ; ou
le message d'information MM comprend un nom de réseau d'AP.

3. Procédé selon la revendication 2, **caractérisé en ce que** la notification, par l'UE, à l'utilisateur qu'il est situé dans le réseau couvert par l'AP en fonction du message d'invite de réseau comprend :
l'obtention, par l'UE, du nom de réseau d'AP à partir du message d'invite de réseau.

4. Procédé selon la revendication 2, **caractérisé en ce que** la notification, par l'UE, à l'utilisateur qu'il est situé dans le réseau couvert par l'AP en fonction du message d'invite de réseau comprend :
l'obtention, par l'UE, de la PLMN ID de la cellule de couverture d'AP où séjourne actuellement l'UE à partir du message de système diffusé par la cellule de couverture d'AP ;
l'obtention d'un nom de réseau d'AP correspondant à la PLMN ID de la cellule de couverture d'AP où séjourne actuellement l'UE en fonction de l'association du nom de réseau d'AP et de la PLMN ID correspondante ; et
l'affichage du nom de réseau d'AP obtenu à l'intention de l'utilisateur.

5. Procédé selon la revendication 1, **caractérisé en ce que** l'action de séjour comprend :
le lancement, par l'UE, d'une actualisation de zone de position/actualisation de zone de routage, LAU/RAU, dans la cellule de couverture d'AP ; et
le séjour, par l'UE, dans la cellule de couverture d'AP après la réalisation de la LAU/RAU.

6. Procédé selon la revendication 1, **caractérisé en ce qu'**il comprend en outre :
la configuration d'une macro cellule de couverture comme PLMN de rattachement dans le réseau coeur, et la configuration de la cellule de couverture d'AP comme PLNM équivalent de la macro cellule de couverture ; et
l'obtention, par l'UE, d'une PLMN ID du macro réseau de couverture à partir du message système diffusé par la macro cellule de couverture après le séjour dans la macro cellule de couverture, et l'affichage du nom du macro réseau de couverture correspondant à l'intention de l'utilisateur.

7. Procédé selon la revendication 1, **caractérisé en ce que** l'action de notification comprend :
la notification, par l'UE, à l'utilisateur qu'il se trouve dans le réseau de couverture d'AP par le biais d'images, de voix ou d'icônes en fonction du message d'invite de réseau.

8. Procédé de notification de la position d'un utilisateur dans un système de communications mobiles, le système de communications mobiles comprenant un point d'accès, AP, et une passerelle d'accès, AG, **caractérisé en ce que** le procédé comprend :
le séjour, par un équipement utilisateur, UE, dans une cellule de couverture d'AP, et
la réception d'un message d'invite de réseau délivré par l'AP ; et
la notification, par l'UE, à un utilisateur qu'il est situé dans un réseau couvert par un AP en fonction du message d'invite de réseau ;
la réception, par l'UE, d'un message de promotion depuis un macro réseau de couverture quand l'UE accède à la macro cellule de couverture depuis la cellule de couverture d'AP ; et
si la cellule de couverture d'AP et la cellule de couverture utilisent une même ID de réseau terrestre public de mobilité, PLMN ID, le remplacement de la chaîne de caractères correspondant à la PLMN ID dans l'UE par le nom du macro réseau de couverture dans le message de promotion, et l'affichage du nom du macro réseau de couverture à l'intention de l'utilisateur ;
dans lequel le message d'invite de réseau est un court message de texte ou un court message multimédia.

9. Equipement Utilisateur, UE, **caractérisé en ce qu'**il comprend :
une unité de réception (61, 51), configurée pour recevoir un message d'invite de réseau depuis un point d'accès, AP, quand l'UE séjourne dans la cellule de couverture d'AP ; et
une unité d'invite de position d'utilisateur (63), configurée pour notifier à un utilisateur qu'il est situé dans un réseau couvert par un AP en fonction du message d'invite de réseau ;
l'unité de réception étant configurée en outre pour recevoir un message de promotion depuis un macro réseau de couverture quand l'UE accède à la macro cellule de couverture depuis la cellule de couverture d'AP ; et
un moyen (54) pour remplacer la chaîne de caractères correspondant à une ID de réseau terrestre public de mobilité, PLMN ID, dans l'UE par le nom du macro réseau de couverture dans le message de promotion si la cellule de couverture d'AP et la cellule de couverture utilisent la même PLMN ID, et afficher le nom du macro réseau de couverture à l'intention de l'utilisateur ;
dans lequel le message d'invite de réseau est un message d'information de gestion de mobilité de GPRS, GMM ; ou
le message d'invite de réseau est un message d'information de gestion de mobilité, MM.

10. UE selon la revendication 9, comprenant en outre :
un moyen (622) pour obtenir un nom de réseau d'AP à partir du message d'invite de réseau.

11. UE selon la revendication 10, comprenant en outre :
un moyen (621) pour obtenir la PLMN ID de la cellule de couverture d'AP où séjourne actuellement l'UE à partir du message de système diffusé par la cellule de couverture d'AP ;
l'obtention d'un nom de réseau d'AP correspondant à la PLMN ID de la cellule de couverture d'AP où séjourne actuellement l'UE en fonction de l'association du nom de réseau d'AP et de la PLMN ID correspondante.

12. UE selon la revendication 10, comprenant en outre :
un moyen pour lancer une actualisation de zone de position/actualisation de zone de routage, LAU/RAU, dans la cellule de couverture d'AP ; et séjourner dans la cellule de couverture d'AP après la réalisation de la LAU/RAU.

13. UE selon la revendication 10, comprenant en outre :
un moyen (53, 63) pour notifier à l'utilisateur qu'il se trouve dans le réseau de couverture d'AP par le biais d'images, de voix ou d'icônes en fonction du message d'invite de réseau.

14. Equipement Utilisateur, UE, **caractérisé en ce qu'**il comprend :
une unité de réception (61, 51), configurée pour recevoir un message d'invite de réseau depuis un point d'accès, AP, quand l'UE séjourne dans la cellule de couverture d'AP ; et
une unité d'invite de position d'utilisateur (63), configurée pour notifier à l'utilisateur qu'il est situé dans un réseau couvert par un AP en fonction du message d'invite de réseau ;
l'unité de réception étant configurée en outre pour recevoir un message de promotion depuis un macro réseau de couverture quand l'UE accède à la macro cellule de couverture depuis la cellule de couverture d'AP ; et
un moyen (54) pour remplacer la chaîne de caractères correspondant à une ID de réseau terrestre public de mobilité, PLMN ID, dans l'UE par le nom du macro réseau de couverture dans le message de promotion si la cellule de couverture d'AP et la cellule de couverture utilisent la même PLMN ID, et afficher le nom du macro réseau de couverture à l'intention de l'utilisateur ;
dans lequel le message d'invite de réseau est un court message de texte ou un court message multimédia.

15. Système de communications mobiles, comprenant un point d'accès, AP et un équipement utilisateur selon l'une quelconque des revendications 9 à 14.
